**Europäisches Patentamt**

**European Patent Office**

**Office européen des brevets**

(11) Veröffentlichungsnummer: **0 016 893**
**B1**

(12) **EUROPÄISCHE PATENTSCHRIFT**

(45) Veröffentlichungstag der Patentschrift:
26.08.81

(51) Int. Cl.³: **B 23 K 3/02**

(21) Anmeldenummer: **79730015.9**

(22) Anmeldetag: **24.12.79**

(54) **Lötkolben.**

(30) Priorität: **30.03.79 DE 2913384**

(43) Veröffentlichungstag der Anmeldung:
**15.10.80 Patentblatt 80/21**

(45) Bekanntmachung des Hinweises auf die Patenterteilung:
**26.08.81 Patentblatt 81/34**

(84) Benannte Vertragsstaaten:
**CH FR GB IT NL**

(56) Entgegenhaltungen:
**DE-A-2 164 760**
**DE-A-2 708 967**
**GB-A-641 967**
**GB-A-828 004**
**GB-A-1 154 437**
**US-A-2 295 195**

(73) Patentinhaber: **ERSA Ernst Sachs KG GmbH & Co.,**
**Leonhard-Karl-Strasse 24, D-6980 Wertheim / Main (DE)**

(72) Erfinder: **Hombrecher, Fritz, Oberer Neuberg 9,**
**D-6980 Wertheim / Main (DE)**

(74) Vertreter: **Lüke, Dierck-Wilm, Dipl.-Ing.,**
**Gelfertstrasse 56, D-1000 Berlin 33 (DE)**

ACTORUM AG.

## Lötkolben

Die Erfindung bezieht sich auf einen Lötkolben mit einer auf das freie Ende seines Stielrohres mittels eines Gleitsitzes lösbar aufgesteckten Lötspitze und mit einem die Lötspitze auf dem Stielrohr haltenden elastisch-federnden Element.

Im Stand der Technik ist das elastisch-federnde Element ein radial wirkender Federring, der über den äusseren Umfang der Lötspitze geschoben wird und diese am Stielrohr festklammert. (GB-A-828 004). Damit der radial federnde Federring überhaupt eine Federkraft ausüben kann, muss die Lötspitze geschlitzt sein.

Ein solcher radial wirkender Federring hat jedoch erhebliche Nachteile. Insbesondere lässt die Wirkung des radialen Federringes nach, sobald eine erstmalige Aufheizung des Lötkolbens mit Lötspitze und Federring erfolgt ist.

Darüber hinaus ermöglicht die Klemmung der geschlitzten Lötspitze mittels des radial wirkenden Federringes keinen ständigen Kontakt des Bodens der Bohrung innerhalb der Lötspitze mit der Stirnseite des Stielrohres, in welches ein Heizkörper zur Beheizung der Lötspitze eingesetzt ist. Entweder durch nicht korrektes Aufschieben der Lötspitze oder durch deren Verschiebung bei Benutzung oder durch nacheinander erfolgendes Aufheizen, Erkalten und Wieder-Aufheizen kann der Kontakt zwischen dem Boden der Bohrung innerhalb der Lötspitze und der Stirnseite des Stielrohres mit dem integrierten Heizelement verloren gehen. Somit kann kein ordnungsgemässer Wärmeübergang vom Stielrohr mit dem integrierten Heizkörper auf die Lötspitze erfolgen. Wenn nur ein Wärmeübergang über einen Teil der Länge der Lötspitze erfolgen kann und insbesondere keine stirnseitige Bodenberührung des Stielrohres mit dem integrierten Heizelement erfolgt, kann die Wärme nicht ordnungsgemäss auf die Lötspitze übertragen werden, die somit zum einen nicht die gewünschte Betriebstemperatur erreichen kann. Zum anderen kann es zu Überhitzungen des Stielrohres mit dem Heizkörper kommen, wodurch der Heizkörper zerstört werden kann.

Darüber hinaus kann die Wirkung eines in die Spitze des Stielrohres eingebauten Thermoelementes zur Überwachung der Temperatur der Lötspitze dann nicht mehr vorhanden sein, wenn die Lötspitze um einen geringen Betrag vom Stielrohr abgerutscht ist, so dass die Stirnseite des Stielrohres nicht mehr in Berührungskontakt zum Boden der Bohrung innerhalb der Lötspitze steht.

Der Erfindung liegt von daher die Aufgabe zugrunde, einen Lötkolben der gattungsgemässen Art dahingehend zu verbessern, dass ein auch unter Wärmeeinwirkung beständiger Sitz der Lötspitze auf dem Stielrohr möglich ist.

Die Lösung dieser Aufgabe ergibt sich aus den kennzeichnenden Merkmalen des Patentanspruches 1. Durch die Verwendung einer Zugfeder als elastisch-federndes Element wird die Lötspitze ständig auf dem Stielrohr gehalten, wobei das freie Ende des Stielrohres kraftschlüssig am Boden der Innenbohrung der Lötspitze anliegt. Es besteht somit ständig eine Kontaktberührung zwischen der Stirnseite des Stielrohres und dem Boden innerhalb der Lötspitze. Hierdurch wird einerseits ein guter und vollständiger Wärmeübergang ermöglicht, so dass keine Gefahr einer Überhitzung des Heizelememtes innerhalb des Stielrohres besteht und andererseits wird die Möglichkeit geschaffen, mittels eines eventuell in das freie Ende des Stielrohres eingebauten Thermoelementes ständig eine genaue Temperaturüberwachung der Lötspitze durchzuführen, da deren Bohrungsboden aufgrund der Wirkung der Zugfeder in ständigem kraftschlüssigem Berührungskontakt mit dem stirnseitigen freien Ende des Stielrohres steht. Schliesslich bleibt auch die Lötspitze unter Wärmeeinwirkung gegenüber dem Stielrohr axial beweglich.

Weitere vorteilhafte Ausgestaltungen der Erfindung ergeben sich aus den Unteransprüchen. Der erfindungsgemässe Lötkolben lässt sich insbesondere dann mit Vorteil einsetzen, wenn gemäss Unteranspruch 4 das freie Ende des Stielrohres mit einem Temperaturfühler versehen ist. In diesem Falle ist sichergestellt, dass das freie Ende des Stielrohres mit dem Temperaturfühler ständig kraftschlüssig am Boden der Lötspitze anliegt, so dass eine optimale Wärmeübertragung zur genauen Temperaturregelung des Lötkolbens möglich ist.

Die Erfindung ist anhand eines in der Zeichnung dargestellten Ausführungsbeispieles näher erläutert. Es zeigen:

Fig. 1 eine Seitenansicht eines Lötkolbens mit der die Lötspitze mit dem Stielrohr verbindenden Zugfeder, etwa in natürlicher Grösse,

Fig. 2 eine Draufsicht auf die Lötspitze und einen Teil der Zugfeder, in etwa natürlicher Grösse,

Fig. 3 eine Einzelheit im Bereich des Bodens der Innenbohrung der Lötspitze, in etwa fünffacher Vergrösserung,

Fig. 4 eine teilweise geschnittene Draufsicht auf die Zugfeder, in etwa fünffacher Vergrösserung und

Fig. 5 eine Seitenansicht des hakenartigen Endes der Zugfeder, in etwa fünffacher Vergrösserung.

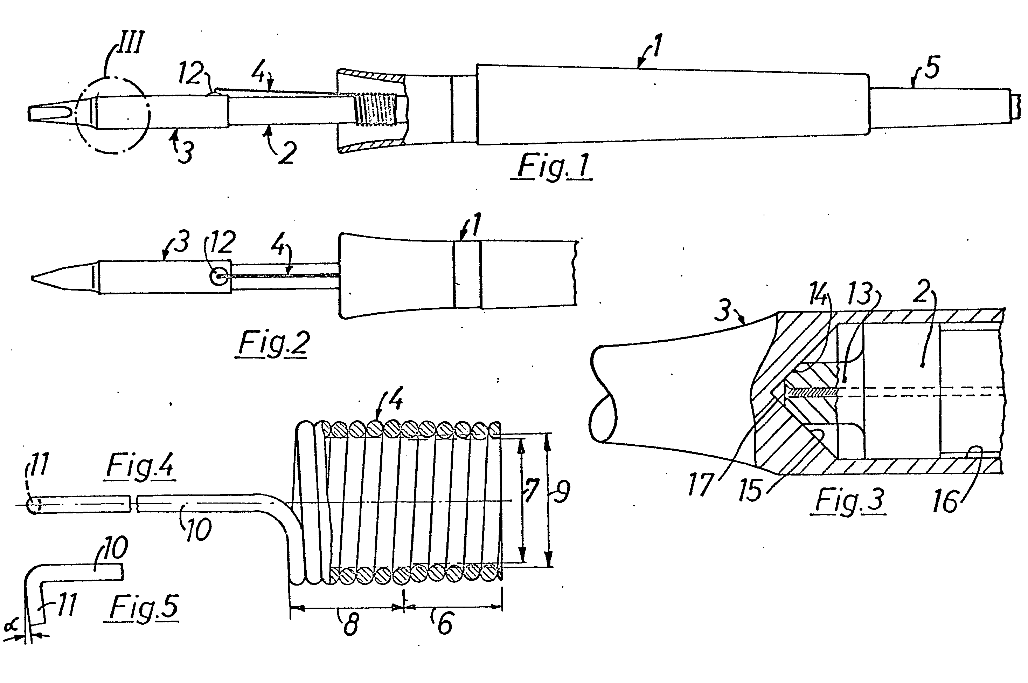

Der in Fig. 1 dargestellte Lötkolben besteht aus einem Handgriff 1, in den ein Stielrohr 2 eingesetzt ist, das am freien Ende eine Lötspitze 3 trägt. Diese ist mit dem Stielrohr 2 über eine Zugfeder 4 kraftschlüssig verbunden. Ein elektrisches Zuleitungskabel 5 verbindet den in das freie Ende des Stielrohres 2 eingesetzten, nicht dargestellten Heizkörper über eine ebenfalls nicht dargestellte Regelgerät mit dem Netz.

Die Zugfeder 4 ist mit ihrem hinteren Teil von der Länge 6 am Stielrohr 2 unterhalb des vorderen, hohlen Endes des Handgriffes 1 festgelegt. Hierzu weist der Teil der Länge 6 der Zugfeder 4 einen Innendurchmesser 7 auf, der mit einem Pressitz am Aussendurchmesser des Stielrohres 2 fest anliegt und die Zugfeder 4 unverrückbar am Stielrohr 2 festlegt. Der vordere Teil von der Länge 8 der Zugfeder 4 weist einen gegenüber dem Durchmesser 7 grösseren Durchmesser 9 auf, der auf dem Aussendurchmesser des Stielrohres 2 frei beweglich ist. Vom vorderen Teil der Länge 8 der Zugfeder 4 erstreckt sich ein Federdrahtende 10 parallel zur Achse des Stielrohres 2 und endet in einem Haken 11. Dieser ist in eine aufgewölbte Durchbrechung 12 des handgriffseitigen Endes der Lötspitze 3 eingerastet.

Im dargestellten Ausführungsbeispiel weist die Zugfeder 4 auf der Länge 6 von 4,4 mm einen Durchmesser von 6,3 mm auf. Die Gesamtlänge der Federwindungen beträgt 10 mm. Die Länge 8 weist einen Innendurchmesser von 6,7 mm auf. Das Ende 10 der Zugfeder 4 hat eine Länge von etwa 35 mm und der Haken 11 hat etwa eine Länge von 3 mm und ist um einen Winkel α von etwa 7 ° über den rechten Winkel gegenüber dem Ende 10 umgebogen.

Die mit ihrem hinteren Teil von der Länge 6 am Stielrohr 2 mit Pressitz festgelegte Zugfeder 4 hält mit ihrem Haken 11 die Lötspitze 3 somit als elastisch federndes Zugelement derart fest, dass das freie Ende des Stielrohres 2 kraftschlüssig am Boden der Innenbohrung 16 der Lötspitze 3 anliegt.

Hierzu ist das freie Ende des Stielrohres 2, in welches der nicht dargestellte Heizkörper eingesetzt ist, mit einem Ansatz 13 versehen, dessen Vorderkante mit einer Phase 14 ausgebildet ist. Die Phase 14 liegt am kegelförmig ausgebildeten Boden 15 der Innenbohrung 16 der Lötspitze 3 an. Der zylindrische Ansatz 13 trägt in seiner freien Stirnseite den Wärmefühler 17, der als Thermoelement ausgebildet ist, dessen Zuleitungen sich durch das Stielrohr 2 erstrecken.

In der dargestellten und beschriebenen Ausführungsform des temperaturgeregelten Lötkolbens ist somit die mit der zylindrischen Innenbohrung 16 versehene Lötspitze 3 auf dem ebenfalls zylindrisch ausgebildeten freien Ende des Stielrohres 2 mit einem Gleitsitz bewegbar. Zur kraftschlüssigen Verbindung des stirnseitigen, durch den Ansatz 13 gebildeten Endes des Stielrohres 2 am kegelförmigen Boden 15 der Innenbohrung 16 ist die Zugfeder 4 als elastisch-federndes Zugelement vorgesehen, wodurch eine optimale Wärmeübertragung zwischen der Lötspitze 3 und dem Thermoelement 17 erzielt wird.

**Patentansprüche**
**Hauptantrag**

1. Lötkolben mit einer auf das freie Ende seines Stielrohres mittels eines Gleitsitzes lösbar aufgesteckten Lötspitze (3) und mit einem der Lötspitze (3) auf dem Stielrohr (2) haltenden elastisch-federnden Element (4), dadurch gekennzeichnet, dass die Lötspitze (3) mit dem Stielrohr (2) über eine Zugfeder (4) als elastisch federndes Element verbunden ist, dass die Zugfeder (4) mit einem Teil am Stielrohr (2) festgelegt ist und mit ihrem anderen Teil mit einem Haken (11) an der Lötspitze (3) angreift und dass das freie Ende des Stielrohres (2) kraftschlüssig am Boden der Innenbohrung (16) der Lötspitze (3) anliegt.

2. Lötkolben nach Anspruch 1, dadurch gekennzeichnet, dass der Durchmesser (7) des am Stielrohr (2) festgelegten Teils (6) der Zugfeder (4) kleiner ist als der Durchmesser (9) des zur Lötspitze (3) hin gerichteten, den Haken (10, 11) tragenden Teils (8) der Zugfeder (4).

3. Lötkolben nach Anspruch 2, dadurch gekennzeichnet, dass der Teil (6) der Zugfeder (4) mittels eines Pressitzes am Aussendurchmesser des Stielrohres (2) festgelegt ist.

4. Lötkolben nach einem der Ansprüche 1 bis 3, mit einem zur Temperaturregelung der Lötspitze durch das Stielrohr zu dessen freiem Ende geführten Temperaturfühler, dadurch gekennzeichnet, dass der Boden (15) der Innenbohrung (16) der Lötspitze (3) kegelförmig ausgebildet ist und dass am Ende des Stielrohres (2) ein den Temperaturfühler tragender, mit einer Phase (14) am freien Ende versehener Ansatz (13) vorgesehen ist, der gegen den kegelförmigen Boden (15) der Innenbohrung (16) der Lötspitze (3) unter Wirkung der Zugfeder (4) kraftschlüssig gehalten ist.

**Revendications**

1. Fer à souder comportant une pointe de soudage enfilée de manière amovible et coulissante sur l'extrémité libre de sa tige creuse, ainsi qu'un élément élastique maintenant ladite pointe sur ladite tige, fer caractérisé en ce que ladite pointe de soudage (3) est reliée à ladite tige creuse (2) par un ressort de traction (4) constituant ledit élément élastique, en ce que ce ressort (4) est fixé par une partie à ladite tige (2) et est accrochée par son autre partie à ladite pointe (3), au moyen d'un crochet (11), et en ce que l'extrémité libre de ladite tige (2) est en liaison mécanique avec le fond de l'alésage (16) ménagé dans ladite pointe (3).

2. Fer à souder selon la revendication 1, caractérisé en ce que le diamètre (7) de la partie (6) du ressort (4) fixée à la tige creuse (2) est plus petit que le diamètre (9) de la partie (8) dudit ressort (4) dont sont solidaires l'extrémité (10) et le crochet (11) et qui est orientée vers la pointe de soudage (3).

3. Fer à souder selon la revendication 2 caractérisé en ce que la partie (6) du ressort (4) est maintenue en place par un ajustage serré sur la périphérie de la tige creuse (2).

4. Fer à souder selon l'une quelconque des revendications 1 à 3, équipé d'une sonde thermomètrique s'étendant dans la tige creuse vers l'extrémité libre de cette dernière, afin de réguler la température de la pointe de soudage, fer caractérisé en ce que le fond (15) de l'alésage (16) de la pointe (3) présente une forme conique et en ce que, à l'extrémité de la tige creuse (2) ist est prévu un embout (13) qui, supportant ladite sonde thermomètrique (17) et comportant un biseau (14) à son extrémité libre, est maintenu par l'action du ressort (4) en liaison mécanique avec ledit fond conique (15) dudit alésage (16) de ladite pointe (3).

## Claims

1. A soldering iron comprising a soldering tip (3) detachably fixed on the free end of its tubular shaft by means of a sliding fit and an elastically resilient element (4) which holds the soldering tip (3) on the tubular shaft (2), characterised in that the soldering tip (3) is fixed to the tubular shaft (2) by means of a tension spring (4) serving as an elastically resilient element, that one part of the tension spring (4) is secured on the tubular shaft (2) and the other part is provided with a hook (11) which engages with the soldering tip (3), and that the free end of the tubular shaft (2) abuts against the bottom of the internal bore (16) of the soldering tip (3) in forcelocking fashion.

2. A soldering iron as claimed in Claim 1, characterised in that the diameter (7) of the part (6) of the tension spring (4) which is secured on the tubular shaft (2) is smaller than the diameter (9) of the part (8) of the tension spring (4) which faces towards the soldering tip (3) and which carries the hook (10, 11).

3. A soldering iron as claimed in Claim 2, characterised in that the part (6) of the tension spring (4) is secured at the outer diameter of the tubular stem (2) by a press fit.

4. A soldering iron as claimed in one of Claims 1 to 3, having a temperature-sensing element for controlling the temperature of the soldering tip, which element is led through the tubular shaft to the free end thereof, characterised in that the bottom (15) of the internal bore (16) of the soldering tip (3) is cone-shaped and that, at the end of the tubular stem (2) there is arranged an additional member (13) which carries the temperature-sensing element and which is provided ad its free end with a chamfer (14) and which is held against the cone-shaped bottom (15) of the internal bore (16) of the soldering tip (3) in force-locking fashion by the action of the tension spring (4).

Fig.1

Fig.2

Fig.3

Fig.4

Fig.5